(19) Europäisches Patentamt
European Patent Office
Office européen des brevets

(11) **EP 1 176 617 B1**

(12) **EUROPEAN PATENT SPECIFICATION**

(45) Date of publication and mention
of the grant of the patent:
**22.09.2010 Bulletin 2010/38**

(51) Int Cl.:
***H01G 9/058*** *(2006.01)* ***C01B 31/08*** *(2006.01)*

(21) Application number: **01117645.0**

(22) Date of filing: **24.07.2001**

(54) **Activated carbon, process for producing the same, polarizable electrode, and electric double layer capacitor**

Aktivierter Kohlenstoff, Herstellungsverfahren, polarisierbare Elektrode, und Doppelschichtkondensator

Charbon actif, méthode de fabrication, électrode polarisable, et condensateur à double couche

(84) Designated Contracting States:
**DE FR GB IT**

(30) Priority: **25.07.2000 JP 2000223680**

(43) Date of publication of application:
**30.01.2002 Bulletin 2002/05**

(73) Proprietors:
• **KURARAY CO., LTD.**
**Kurashiki-shi, Okayama-ken 710 (JP)**
• **HONDA GIKEN KOGYO KABUSHIKI KAISHA**
**Minato-ku,**
**Tokyo 107 (JP)**

(72) Inventors:
• **Sugo, Nozomu**
**Kurashiki-shi,**
**Okayama-ken (JP)**
• **Iwasaki, Hideharu**
**Kurashiki-shi,**
**Okayama-ken (JP)**
• **Uehara, Goki**
**Kurashiki-shi,**
**Okayama-ken (JP)**

(74) Representative: **Vossius & Partner**
**Siebertstrasse 4**
**81675 München (DE)**

(56) References cited:
**EP-A- 0 927 778    GB-A- 1 383 085**
**US-A- 4 420 443    US-A- 5 387 333**

• **PATENT ABSTRACTS OF JAPAN vol. 018, no. 248 (C-1198), 12 May 1994 (1994-05-12) & JP 06 032609 A (NIPPON STEEL CORP), 8 February 1994 (1994-02-08)**
• **PATENT ABSTRACTS OF JAPAN vol. 017, no. 551 (C-1117), 5 October 1993 (1993-10-05) & JP 05 155673 A (KAWASAKI STEEL CORP), 22 June 1993 (1993-06-22)**
• **PATENT ABSTRACTS OF JAPAN vol. 2000, no. 01, 31 January 2000 (2000-01-31) & JP 11 293527 A (PETOCA LTD), 26 October 1999 (1999-10-26)**
• **MONDORI ET AL: "Influence of properties of coal tars on opreparation of isotropic pitch precursor, general purpose carbon fiber and activated carbon fiber." TANSO, no. 193, 2000, pages 180-185,**

**Description**

The present invention relates to a process for producing activated carbon, which is made from granular isotropic pitch; a polarizable electrode; and an electric double layer capacitor. By making the activated carbon of the present invention into polarizable electrodes and combining it with current collectors and an electrolyte, a capacitor which has a large capacitance and is superior in low-expansibility at the time of charge and discharge can be made.

In recent years, attention has been paid to an electric double layer capacitor e.g. as a backup power source or an auxiliary power source.

Development in which attention is paid to the performance of activated carbon as an electrode for an electric double layer capacitor has been widely made. Since an electric double layer capacitor using activated carbon as polarizable electrodes is generally superior in electrostatic capacity, the capacitor causes the development in the field of electronics and demand as use thereof for an electric device is drastically increasing. In recent years, conventional memory backup power sources have been made small-sized and further large-capacitance products which are used in auxiliary electrodes in a motor or the like have been developed.

When different two layers, for example, a solid electrode and an electrolyte solution are brought in contact with each other, positive and negative charges are arranged and distributed in the interface thereof at a very short interval. When an voltage is applied between such electrodes so that the electrodes are charged, ions are arranged in the electrolyte solution to compensate for electric charges. Such an ion-arranged or dispersed layer is an electric double layer. The device in which the capacitance of the electrode interface, resulting from the formation of the electric double layer, is used is an electric double layer capacitor.

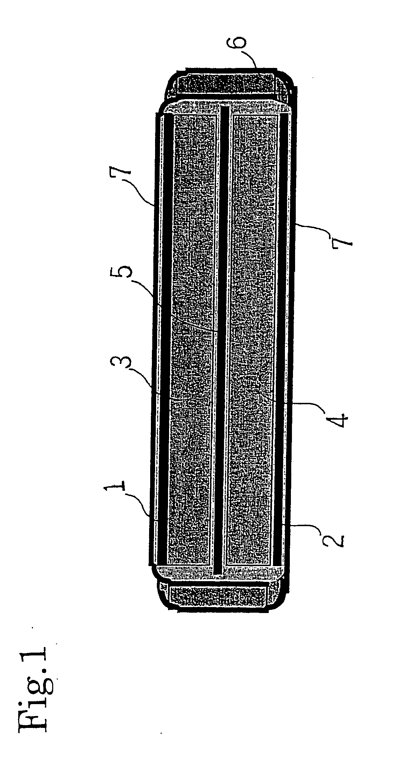

Hitherto, as electric double layer capacitors (condensers), capacitors having cylinder-type, lamination-type and coin-type structures have been known. FIG. 1 schematically illustrates an electric double layer capacitor having the coin-type structure. In FIG. 1, reference numbers 1 and 2 indicate current collectors made e.g. of aluminum mesh; 3 and 4, polarizable electrodes; 5, a separator made of e.g. polypropylene nonwoven fabric; 6, a gasket made of e.g. polypropylene; and 7, a case made of aluminium or stainless steel. The members 1 and 2 are brought in contact with the polarizable electrodes 3 and 4, respectively, so that the members 1 and 2 become current collectors for the respective polarizable electrodes and can function as connecting-terminals to an external circuit. In such a way, an electric double layer capacitor has, in a case, a pair of polarizable electrodes made of activated carbon powder or fiber and a separator therebetween, which is porous and has ion-permeability. The polarizable electrodes and the separator get wet with an electrolyte solution. If necessary, current collectors are inserted between the polarizable electrodes and the case or deposited on the electrodes. Concerning the case, an opening between an upper lid and a lower case is sealed up with a sealing member so that the electrolyte solution does not leak out.

An electric double layer capacitor is generally better in instantaneous charge and discharge ability than batteries, and causes a small deterioration in repetition charge and discharge ability, and does not give overvoltage at the time of charge and discharge. Therefore, the electric double layer capacitor has such a feature that an electric circuit can be made simple. Moreover, the remaining capacitance of the electric double layer capacitor can easily be known and the endurance temperature thereof is wide. It has been investigated that such an electric double layer capacitor is used as a memory of a microcomputer or an IC, a backup power source in a timer section or other control sections, a power source of electrical equipment, a power source used when electricity is cut off or a power source adapting for car. Such use has been partially made practicable. The electric double layer capacitor has been required to be light or compact. That is, an improvement in the capacitance of its electric double layer, per unit volume and per unit weight, has been demanded.

In order to improve the electrostatic capacitance of an electric double layer capacitor, it is important to investigate constituting members thereof. For example, about the material of a polarizable electrode, which is one of the constituting members, it is important that the material has a large specific surface area, a large bulk specific gravity, electrochemically inactivity and a small resistance. The matter that activated carbon is suitable for the material satisfying such requirements and the matter that an example of such activated carbon is activated carbon powder obtained by carbonizing and activating a plant material such as wood meal are stated on page 68 of "Technologies & Materials for EDLC" published by CMC(the first issue published on October 26, 1998).

JP-A-11-135380 discloses a process for producing activated carbon, the material of which is different from that of the above-mentioned activated carbon, wherein a meso phase resin obtained by cooling and solidifying a meso phase extracted from petroleum pitch is used; and a polarizable electrode and an electric double layer capacitor which are made of the activated carbon.

JP-A-10-199767 suggests a process of carbonizing a material comprising petroleum coke or coal pitch coke in the atmosphere of an inert gas and then activating the carbonized material with an alkali metal hydroxide to produce carbon material for an electric double layer capacitor having a high electrostatic capacitance. High-capacitance activated carbon obtained by heat-treating petroleum coke, meso phase carbon fiber (MCF) or infusible vinyl chloride beforehand at about 600-900°C and activating the treated material with potassium hydroxide is described on pages 82-84 of "Electric Double Layer Capacitor and Electricity Storing System" published by Nikkan Kogyo Newspaper Publishing Company (1999). The matter that an electrode made of the activated carbon expands at the time of charge so that the thickness thereof will be 1.5-3 times is also described thereon. JP-A-11-317333 discloses a material exhibiting a large electrostatic capacitance as an electric double layer capacitor electrode and states that the thickness of the electrode expands in the same way as above when a voltage is applied thereto.

However, the activated carbons disclosed in these publications are activated carbons made from anisotropic pitch, that is, meso phase and,pitch, phenol resin, or petroleum pitch, and the activated carbons are different from the activated carbon of the present invention, which is made from isotropic pitch, in raw material.

It is said that the electrostatic capacitance of activated carbon used in an electric double layer capacitor is in proportion to its specific surface area. In fact, to increase the electrostatic capacitance, development has been made with efforts for increasing the specific surface area. However, recent researches suggest that in order to increase the electrostatic capacitance, it is important to investigate factors other than the specific surface area (see, for example, "DENKI KAGAKU" Vol. 66, No. 12, pages 1311-1317(1998)). For this purpose, it is important that the specific surface area is improved and further used materials or production conditions are studied.

JP-A-11-293527 discloses that isotropic pitch is used as material of activated carbon. This publication states that an electric double layer capacitor having a large electrostatic capacitance is made using activated carbon fiber obtained by pulverizing optically isotropic pitch type infused fiber into pieces having an average particle diameter of 5-50 $\mu$m and activating the resultant pieces of the fiber with an alkali.However, in order to keep spinnability of an optically isotropic pitch type fiber as described in this publication, it is necessary to suppress the generation of over-polymerized materials or volatile substances, which result in a drop in the spinnability of the optically isotropic pitch as raw material of the activated carbon, or to control the softening point minutely, as described in "TANSO" No. 193, pages 180-185 (2000). It is also necessary to keep strength required for the step of winding the fiber or the nonwoven fabric, the step being subsequent to the spinning step.

US-A-5 387 333 discloses the production of activated carbon fibers from isotropic pitch.

As described above, in order to obtain activated carbon used, as polarizable electrodes, in the electric double layer capacitor disclosed in the publication, it is important to produce stably spinnable optically isotropic pitch making the avoidance of the above-mentioned problems possible. Furthermore, it is essential to carry out the step of producing such spinnable optically isotropic pitch stably and the step of making the pitch into fiber. Thus, complicated processing is necessary. Therefore, costs for the production become expensive. It is difficult to say that the method disclosed in the publication is industrially profitable. The fiber has an anisotropic shape and it also has orientation when it is spun, so that the reactivities of the major axis and the short axis of the fiber are different from each other. Therefore, at the time of making the fiber infusible, the amount of oxygen introduced from the surface of the fiber along the short axis direction of the fiber may be different from such an amount along the major axis direction of the fiber. The fiber-activated degrees (for example, structural changes) when the fiber is activated may be different in the short axis direction of the fiber and in the major axis direction of the fiber. The fiber may be poor in workability since the fiber has an anisotropic shape.

By the expansion of an electrode made of a material which expands largely at the time of charge, the capacitor may be deformed so that the electrolyte solution may leak from the sealed opening. Therefore, it is necessary to consider a capacitor structure for suppressing the expansion or a surplus volume for the expansion of the electrode.

Therefore, a first object of the present invention is to provide activated carbon having a large electrostatic capacitance and causing only small expansion of an electrode, and a process for producing activated carbon which requires neither a fiber-forming step nor complicated processing. A second object of the present invention is to provide a polarizable electrode and an electric double layer capacitor which are made using such activated carbon.

These objects could surprisingly be achieved by using granular activated carbon which is made from isotropic pitch and is not required to be made into fiber.

That is, the present invention relates to a process for producing activated carbon, which is made from granular isotropic pitch.

Another aspect of the present invention is a process for producing activated carbon, wherein granular isotropic pitch is activated with a chemical agent.

A further aspect of the present invention is a polarizable electrode produced by mixing the above-mentioned activated carbon with at least a binder and an electroconductive filler.

A still further aspect of the present invention is an electric double layer capacitor composed essentially of a pair of polarizable electrodes, a current collector set onto each of the polarizable electrodes, and an electrolyte solution, wherein at least one of the polarizable electrode is the above-mentioned polarizable electrode.

The invention is defined in the appended claims.

FIG. 1 is a schematic view illustrating an example in which the activated carbon of the present invention is applied to an electrode of a capacitor.

FIG. 2 is a schematic view illustrating another example in which the activated carbon of the present invention is applied to an electrode of a capacitor.

The activated carbon of the present invention needs to be made from granular isotropic pitch. Such isotropic pitch can be obtained from natural pitch or synthetic pitch. Examples of the natural pitch include cokes such as petroleum coke, coal coke and pitch coke; pitches such as petroleum pitch and coal pitch; and heavy oils such as petroleum distillation residue, naphtha thermal-decomposition residue, ethylene bottom oil, liquefied coal oil, and coal tar. Examples of the synthetic pitch include polymers obtained from an aromatic compound such as naphthalene or anthracene.

To produce the isotropic pitch, the following methods may be used: a method of heat-treating coal tar pitch or decomposition residue oil of petroleum at 350-500 °C until small spheres of a meso phase are produced, using a solvent to extract and remove solvent-insoluble components comprising the meso phase, and then heat-treating the resultant at 350-500 °C; and a method of using a nitro compound as a softening point raising agent or a polymerization promoter; and a method of adding a nitro compound as a polymerization promoter to taror pitch, and heat-treating the resultant product at 100-400 °C while blowing gas comprising oxygen or ozone therein. To make the steps simple, it is preferred that coal pitch coke, petroleum coke or the like is heat-treated while gas comprising oxygen and an optional polymerization promoter are introduced therein. The thus produced isotropic pitch usually has a softening point of 200 °C or higher.

In the present invention granular isotropic pitch is used as raw material of activated carbon. In the present invention, the granular isotropic pitch is solid isotropic pitch having an average particle diameter of 10 mm or less, preferably 5 mm or less. The word "granular" in the present invention also includes the meaning of fine powder having an average particle of e.g. 400 $\mu$m or less, 20 $\mu$m or less or 10 $\mu$m or less, To make isotropic pitch into such a granular form, it is advisable to use a method of passing isotropic pitch, when produced, through nozzles, a method of taking out isotropic pitch in a lump form and then pulverizing the pitch, or the like method. By using such granular isotropic pitch, the process for producing activated carbon is made simple, and costs for the production are reduced. Moreover, the activated carbon can be caused to exhibit a high electrostatic capacitance and made good in workability into an electrode, and low-expansibility. In the case of adopting the step of taking out pitch into a lump form and pulverizing the pitch into a powder form, the step may be carried out before conversion into a infusible state, which will be described after, before heat-treatment, before activation, or after the activation. Preferably, the step is carried out before conversion into a infusible state, or before activation.

In the case that the activated carbon of the present invention is made into polarizable electrodes of an electric double layer capacitor, the specific surface area of the activated carbon is preferably set to 50-4000 $m^2/g$ since the activated carbon exhibits a high electrostatic capacitance, and is more preferably 100-2500 $m^2/g$. This specific surface area can be measured, for example, by a known BET method based on nitrogen adsorption. The total amount of functional groups of the surface of the activated carbon is preferably set to 2.5 meq/g or less. If the total amount is 2.5 meq/g or more, the endurance of the capacitor may drop. The total amount of functional groups of the surface of the activated carbon can easily be obtained by titration with hydrochloric acid.

In the activated carbon of the present invention, the half band width of a peak indicating the D band (near 1250 $cm^{-1}$) of amorphous carbon in Raman spectra is preferably 1-4 times larger than the half band width of a peak indicating the D band (near 1300 $cm^{-1}$) of graphite carbon. The peak of the D band of amorphous carbon and the peak of the D band of graphite carbon can be obtained by subjecting each of peaks near 1550 $cm^{-1}$ and near 1350 $cm^{-1}$ to curve-fitting treatment, using a Gaussian function, and thus dividing them into 4 pieces, that is, a peak indicating the D band of amorphous carbon, a peak indicating the D band of graphite carbon, a peak indicating the G band of amorphous carbon, and a peak indicating the G band of graphite carbon. In other words, when $Nd^{3+}$:YAG laser having a wavelength of 532 nm and a CCD are used as exciting light and a detector, respectively, the half band width of the peak indicating the D band of amorphous carbon is more preferably 1-3.5 times larger than that of the peak indicating the D band of graphite carbon.

In order to obtain the activated carbon of the present invention, which is made from granular isotropic pitch, it is sufficient to activate granular isotropic pitch. However, in order to obtain a high electrostatic capacitance, activation with a chemical agent is adopted. If the surface of the pitch is partially oxidized in the process for producing activated carbon of the present invention to make the pitch insfusible (make grains which constitute the pitch not to adhere to each other by oxidization of the surfaces of the grains), melting adhesion between the granules can be prevented. Therefore, it is preferred that granular isotropic pitch is beforehand made into such a infusible state that the pitch is not dissolved at the time of activation, and subsequently the pitch is activated with a chemical agent. In the case that the average particle diameter is about 20 $\mu$m, the amount of oxygen contained in the pitch, as a criterion for conversion into the infusible state, depends on the fineness (granularity) of the isotropic pitch, and is desirably set to 1.5-10% by weight. If the amount of oxygen is 10% or more by weight, the yield of the pitch at the time of the conversion into the infusible state may be largely lowered. If the oxygen amount is less than 1.5% by weight, the grains may be adhered to each other.

The manner for the conversion into the infusible state is not particularly limited, and may be, for example, a manner of heating the pitch in the presence of gas containing oxygen. The conditions for the conversion into the infusible state depend on the needed amount of introduced oxygen, the amount of the isotropic pitch, the partial pressure ratio of oxygen gas, the flow rate of the gas, the temperature and so on. In general, the temperature of the pitch is raised up to a temperature below 800 °C, preferably a temperature within the range of 250 - 600 °C in the presence of gas containing oxygen, for example, air, and then the temperature is kept from 5 minutes to 15 hours. If the temperature is over 600 °C, the yield of the pitch after the conversion into the infusible state, which depends on conditions such as the partial pressure of oxygen gas, may be lowered.

The infusible granular isotropic pitch may be activated as it is, but the pitch may be heat-treated within the range of 600-1000 °C, in the atmosphere of an inert gas in order to remove volatile substances or improve the capacitance per volume. If the heat-treating temperature is higher, the expansion of the electrodes gets large at the time of charge or the activation does not advance easily. Preferably, the granular isotropic pitch is made infusible under the above-mentioned conditions and further after heat-treatment under the above-mentioned conditions the pitch is activated with a chemical agent to produce activated carbon.

Examples of the manner of the activation include a manner of performing activation with oxidizing gas, for example, steam, $CO_2$ gas, air, gas generated when combustion gas such as LPG is burned, or a mixed gas thereof; and a manner of performing activation by adding a chemical agent such as zinc chloride, potassium hydroxide, sodium hydroxide, phosphoric acid, calcium chloride, potassium sulfide, or sulfuric acid.

The activation with a chemical agent is adopted in the present invention. It is preferred for giving a high electrostatic capacitance to use a chemical agent at least one part of which is a compound comprising an alkali metal element. It is more preferred to use, as the chemical agent, potassium hydroxide or sodium hydroxide. The activation with a chemical agent is performed preferably at a temperature of 500-900 °C, more preferably at a temperature of 600-800 °C. If the amount of the used chemical agent is too small, the degree of the activation is low so that the electrostatic capacitance trends to be small. If the amount is too large, the pitch is excessively activated so that the bulk density of the activated carbon becomes small and the electrostatic capacitance per volume trends to be small. Thus, the amount of the chemical agent is preferably 100-400 parts by weight, more preferably 110-240 parts by weight in relative to 100 parts by weight of the isotropic pitch.

Upon the addition of a chemical agent, the agent in a solid form may be mixed, as it is, with the activated carbon, or the agent in the state of an aqueous solution may be added to the activated carbon. Needless to say, in the case of the addition of the agent in the state of an aqueous solution, the same effects as in the case of the addition of the solid agent can be exhibited. At the time of the activation, it is preferred that the chemical agent is positively mixed with the activated carbon while the chemical agent is dissolved. Such operation makes it possible to make the degree that the activated carbon is activated uniform, so that a drop in the electrostatic capacitance can be prevented. The time when the activating temperature is maintained is set to 20 hours or less, preferably 10 hours or less.

The activating step in the present invention is performed through a pitch-moistening step of making at least the surface of a granular mixture of isotropic pitch and a chemical agent into a moisture state at a temperature of 200°C or lower, a pitch-solidifying step of canceling the moisture state at a temperature of 400 °C or lower into a solid state, and a pitch-heat-treating step of heat-treating the solid at a temperature over 400 °C keeping the solid state. Corrosion of the production machine can thereby be reduced. Thus, such a case is preferred. It is more preferred to cancel the moisture state at a temperature of 250 °C or lower. The wording "the surface of the pitch is in a moisture state" or any similar wording, referred to in the present invention, means that the surface of the mixture of the pitch and the chemical agent is kept in a solid state but looks wet when the surface is observed with naked eyes. The wording "the moisture state is cancelled into a solid state" or any similar wording means that the surface of the solid is in a dry state.

E.g. $CO_2$ gas, $CO_2$ gas containing water vapor gas or an inert gas is introduced into the resultant activated carbon, and subsequently the activated carbon is supplied to a refining step of performing washing with water, washing with an acid, washing with an alkali, pulverization, granulation or drying, or a secondary working step. In the refining step, the amount of heavy metals is set to 100 ppm or less, preferably 50 ppm or less. If the amount of remaining metals is large, the metals may unfavorably cause short circuits. The thus obtained activated carbon is mixed with an electroconductive filler such as carbon black, and a binder so as to be in a paste state, and then this paste is applied to a current collector. Thereafter, the resultant is pressed to make a coat electrode. The paste or the materials kneaded in a dry state are formed into a sheet. The resultant sheet is used as a sheet electrode. Upon the mixture, an organic solvent such alcohol or N-methylpyrrolidone, a solvent such as water, a dispersing agent, any one of various additives, and so on may be used if necessary. Such an electrode is used suitably for at least one polarizable electrode of an electric double layer capacitor. To obtain a highly useful electric double layer capacitor having a high electrostatic capacitance per volume, in each of polarizable electrodes the electrode density thereof is preferably set to 0.3 g/cm$^3$ or more, and is more preferably set to 0.5 g/cm$^3$.

Examples of the binder include polyvinylidene fluoride, polytetrafluoro ethylene, vinylidene fluoride-hexafluoropropylene copolymer, polytrifluorochloro ethylene, isoprene rubber, butadiene rubber, ethylene-propylene rubber, nitrile rubber, chloroprene rubber, acrylonitrile-butadiene-styrene copolymer, polyester, polyamide, and polycarbonate. The binder may be added in a powdery state or in an emulsion state.

Examples of a solvent for the electrolyte used in the present invention include carbonates such as dimethyl carbonate, diethyl carbonate, ethylene carbonate, and propylene carbonate; nitriles such as acetonitrile, and propionitrile; lactones such as γ-butyrolactone, α-methyl-γ-butyrolactone, β-methyl-γ-butyrolactone, γ-valerolactone, and 3-methyl-γ-valerolactone; sulfoxides such as dimethylsulfoxide, and diethylsulfoxide; amides such as dimethylformamide, and diethylformamide; ethers such as tetrahydrofuran, and dimethoxyethane; and sulfolanes such as dimethyl sulfolane, and sulfolane. These organic solvents may be used alone, or a mixed solvent comprising two or more selected from these solvents may be used.

Examples of the electrolyte dissolved in these organic solvents include ammonium tetrafluoroborates such as tetraethyl ammonium tetrafluoroborate, tetramethyl ammonium tetrafluoroborate, tetrapropyl ammonium tetrafluoroborate, tetrabutyl ammonium tetrafluoroborate, trimethylethyl ammonium tetrafluoroborate, triethylmethyl ammonium tetrafluoroborate, diethyldimethyl ammonium tetrafluoroborate, N-ethyl-N-methylpyrrolidinium tetrafluoroborate, N,N-tetramethylenepyrrolidium tetrafluoroborate, and 1-ethyl-3-methyl imidazolium tetrafluoroborate; ammonium perchlorates such as tetraethyl ammonium perchlorate, tetramethyl ammonium perchlorate, tetrapropyl ammonium perchlorate, tetrabutyl ammonium perchlorate, trimethylethyl perchlorate, triethylmethyl ammonium perchlorate, diethyldimethyl ammonium perchlorate, N-ethyl-N-methylpyrrolidinium perchlorate, N,N-tetramethylenepyrrolidium perchlorate, and 1-ethyl-3-methyl imidazolium perchlorate; ammonium hexafluorophosphate such as tetraethyl ammonium hexafluorophosphate, tetramethyl ammonium hexafluorophosphate tetrapropyl ammonium hexafluorophosphate, tetrabutyl ammonium hexafluorophosphate, trimethylethyl ammonium hexafluorophosphate, triethylmethyl ammonium hexafluorophosphate, and diethyldimethyl ammonium hexafluorophosphate; lithium hexafluorophosphate; and lithium tetrafluoro borate.

The concentration of the electrolyte is preferably from 0.5 to 5 moles/liter (M/L), and is particularly preferably from 1 to 2.5 M/L. If the concentration of the electrolyte is below 0.5 M/L, the electrostatic capacitance may drop.

As described above, the activated carbon of the present invention is used by mixing a binder and an electroconductive filler in a solvent and making the resultant solution into a polarizable electrode such as a coat electrode or a sheet electrode by any known method. An electric double layer capacitor can be composed of a pair of such polarizable electrodes, a current collector set onto each of the polarizable electrodes, and an electrolyte solution, and the coat electrode or the sheet electrode can be used as at least one of the polarizable electrodes. In the electric double layer capacitor, it is desired from the viewpoint of mechanical strength that the expansion coefficient of its polarizable electrodes after charge and discharge is as low as possible. In the electric double layer capacitor of the present invention, the expansion coefficient of its polarizable electrodes after charge and discharge is preferably 40% or below, more preferably 0-20%. Thus, the electric double layer capacitor is superior in low-expansibility.

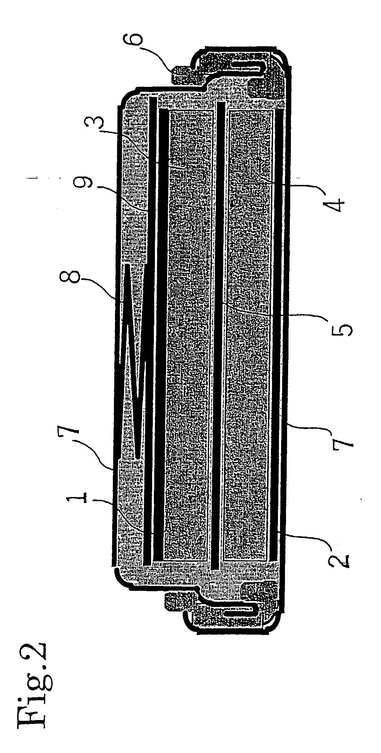

The outline of an example of the electric double layer capacitor is the same as illustrated in FIG. 1. FIG. 2 illustrates another example of the electric double layer capacitor of the present invention. Reference numbers 8 and 9 represent a pressure adjusting spring and a pressure plate, respectively. Hereinafter, the present invention will be specifically described by way of Examples. However, the present invention is never limited to these Examples.

Examples

Example 1

Isotropic pitch (softening point: 297 °C) which had an oxygen concentration of 1.5% and was obtained from coal pitch coke was made infusible and pulverized to give isotropic pitch powder having an average particle size of 20 μm. Into a cylindrical reaction tube which was made of Hastelloy and had an inner diameter of 47 mm were put 6 g of the resultant infusible isotropic pitch powder (oxygen concentration: 3.0%) and 12 g of pulverized potassium hydroxide. The temperature of the system was raised from 200 °C to 700 °C at a rate of 200 °C/hour in the current of nitrogen (flow rate: 300 mL/minute). Thereafter, the raised temperature was kept for 1 hour to activate the isotropic pitch. While the content in the tube was in a slurry state, that is, after the oven temperature reached to 390 °C, the content was stirred for 30 minutes. After the activation, the content was cooled and then $CO_2$ gas was introduced into the reaction tube.

Next, nitrogen gas was passed in a bottle in which pure water was put, and the nitrogen gas containing water vapor was introduced in the reaction tube. Washing with an aqueous alkali, washing with water and washing with 0.1 N hydrochloric acid solution were performed, and subsequently washing with water was repeated to remove metal components. Thereafter, the washed product was dried by a hot-wind drier and a vacuum drier, to give activated carbon. The specific surface area of the activated carbon was measured. As a result, it was 2060 $m^2$/g. Furthermore, 25 ml of a 0.1 M/L, solution of ethoxide sodium in ethanol was added to 500 mg of the activated carbon. The solution was stirred for 16 hours and subsequently this solution was filtrated and titrated with a 0.1 N hydrochloric acid. In this way, the amount of all function groups of the surface of the activated carbon was calculated per unit weight of the activated carbon. As a result, it was 1.9 meq/g. The Raman spectrum of the activated carbon was measured with a Raman spectroscopic photometer Holoprobe 532 product by Kaiser (exciting light: $Nd^{3+}$: YAG laser having a wavelength of 532 nm, detector: charge coupled device, and laser power: 4-10 mW). Peak-division was performed, using a Gaussin function. The half band width of the peak indicating the D band of amorphous carbon was divided by that of the peak indicating the D band of graphite carbon. The resultant value (abbreviated to the D ratio hereinafter) was 2.8. The measurement was performed under the condition of N=3. The average value thereof was adopted

To this activated carbon were added polytetrafluoroethylene ["Teflon 6J" (trade name; product by DUPONT-MITSUI FLUOROCHEMICALS)] and an electroconductive filler ["Denka Black" (trade name; product by Denki Kagaku Kogyo Kabushiki Kaisha)], so that the activated carbon: the polytetrafluoroethylene: the electroconductive filler would be 81: 10: 9(weight ratio). The mixture was kneaded and made into a sheet. The sheet was punched out to give circular polarizable electrodes having a diameter of 11 mm. The electrodes were vacuum-dried and transferred to a glove box having a dew point of -80°C or lower. Subsequent working concerned with cell-production was performed in the glove box. The thickness and the weight of the electrodes were measured after the drying, so as to calculate the electrode density of the polarizable electrodes.

An electrolytic solution for use was a 1 M/L solution of tetraethyl ammonium tetrafluoroborate in propylene carbonate. The polarizable electrodes were immersed in the electrolytic solution in vacuum for 30 minutes. As separators, two glass filters ["GB100R" (trade name; product by Toyo Roshi Kaisha, Ltd.)], each diameter of which was made to 13 mm by punching-out, were used. These members and an HS cell product by Hohsen Corp. were used to fabricate a capacitor. The fabricated capacitor was charged at a charge voltage of 2.7 V and a charge current of 3 mA. Thereafter, the capacitor was charged at a constant voltage of 2.7 V until a current of 1 mA was given. Subsequently, the capacitor was discharged at a constant current of 3 mA. This process was repeated. From the inclination from 1.2 V to 1.0 V in a sixth cycle thereof, the electrostatic capacitance of the capacitor was obtained. The result is shown in Table 1. After the charge and discharge, the electrodes were taken out, and then the expansion coefficient of the electrodes was calculated from the following equation:

```
(electrode thickness after the charge and the discharge -

electrode thickness before the immersion into the electrolytic

solution)/(electrode thickness before the immersion into the

electrolytic solution)
```

Example 2

Activated carbon was prepared in the same manner as Example 1 except that the temperature of the system was raised from 200 to 800 °C over 3 hours and then the raised temperature was kept for 2 hours(yield: 74%). Results about the electrode density, the electrostatic capacitance, the specific surface area and the total amount of functions groups, and the D ratio are shown in Table 1.

Example 3

Activated carbon was prepared in the same manner as in Example 1 except that isotropic pitch which was made infusible and had an oxygen concentration of 5%, a softening point of 262 °C and an average particle diameter of 12 $\mu$m was used. Results about the above-mentioned items are shown in Table 1.

Example 4

The isotropic pitch used in Example 3 was put on a quartz glass boat, and the boat was introduced into a tubular reaction furnace having an inner diameter of 4.7 cm. The temperature of the furnace was raised up to 700 °C at a rate of 200 °C/hour in the current of nitrogen (flow rate: 500 mL/minute), and the raised temperature was kept for 2 hours. Thereafter, the pitch was cooled and pulverized into powder having an average diameter of 6 $\mu$m. Thus, isotropic pitch subjected to the heat-treatment was obtained (yield: 80%). Activation was performed in the same way as in Example 1, to give activated carbon. Results about the above-mentioned items are shown in Table 1.

Example 5

Activated carbon was prepared in the same manner as in Example 1 except that the temperature of the heat-treated isotropic pitch given in Example 4 was raised from 200 to 650 °C at a rate of 200 °C /hour, and was then kept for 2 hours to perform activation(yield: 73%). Results about the above-mentioned items are shown in Table 1.

Example 6

The same manner as in Example 4 was carried out except that the temperature of the isotropic pitch used in Example 1 was raised to 600 °C at a rate of 200 °C/hour, so as to give heat-treated isotropic pitch (yield: 84%). This material was activated in the same way as in Example 1, to prepare activated carbon(yield: 65%). Results about the above-mentioned items are shown in Table 1.

Example 7

The same manner as in Example 4 was carried out except that the temperature of the materials used in Example 1 was raised to 800 °C at a rate of 200 °C/hour, so as to give heat-treated isotropic pitch (yield: 79%). This material was activated in the same way as in Example 1, to prepare activated carbon(yield: 79%). Results about the above-mentioned items are shown in Table 1.

Example 8

The same manner as in Example 4 was carried out except that the temperature of isotropic pitch which was made infusible and had an oxygen concentration of 3% and a softening point of 297 °C was raised to 950 °C at a rate of 200 °C/hour, so as to give heat-treated isotropic pitch (yield: 74%). This material was activated in the same way as in Example 1, to prepare activated carbon. Results about the above-mentioned items are shown in Table 1.

Example 9

The same matter as in Example 1 was carried out except that isotropic pitch (oxygen concentration: 1.5%) which was not made infusible was used, to prepare activated carbon (yield: 75%). Results about the above-mentioned items are shown in Table 1.

Example 10

The temperature of isotropic pitch (oxygen concentration: 1.5%) which was not made infusible was raised to 700 °C at a rate of 200 °C/hour, and the raised temperature was kept for 2 hours, so as to give heat-treated isotropic pitch. This material was activated in the same way as in Example 1, to prepare activated carbon. Results about the above-mentioned items are shown in Table 1.

Example 11

To 5 g of the isotropic pitch of Example 1 was added 10 g of pulverized potassium hydroxide, and then the temperature of the pitch was raised to 160 °C at a temperature-raising rate of 2 °C/minute while the pitch was stirred in the current of nitrogen (flow rate: 300 mL/minute). Thus, the surface of the pitch was made into a moisture state. The pitch was then kept at 160 °C for 2 hours to cancel the moisture state, thereby making the pitch into a solid state. The sample in a lump form was put on a plate made of SUS304 in the current of nitrogen (flow rate: 50 mL/minute). The temperature of the pitch was raised to 700 °C at a rate of 200 °C/hour. The raised temperature was then kept for 1 hour to complete the activation. Up to the end of the activation, the form of the pitch was solid. After the activation, the pitch was cooled and $CO_2$ gas was introduced into the tubular reaction furnace. Next, nitrogen gas was passed in an air-washing bottle in which pure water was put, and the nitrogen gas containing water vapor was introduced in the reaction tube. Washing with an aqueous alkali, washing with water and washing with 0.1 N hydrochloric acid solution were performed, and subsequently washing with water was repeated. Thereafter, the washed product was dried by a hot-wind drier and a vacuum drier, to give activated carbon. Results about the above-mentioned items are shown in Table 1. The activated carbon was subjected to wet decomposition to measure the amounts of metals contained in the activated carbon and the amounts of metals contained in the activated carbon of Example 1 by means of an inductivity coupled plasma (ICP) measuring apparatus (ICP optical emission spectrometer IRISAP product by Jarrell Ash). The results are shown in Table 2.

Example 12

Activated carbon was prepared in the same way as in Example 4 except that the temperature of the isotropic pitch used in Example 4 was raised from 200 to 600 °C at a rate of 200 °C/hour and the pitch was kept at 600 °C for 5 hours to activate the pitch(yield: 82%). Results about the above-mentioned items are shown in Table 1.

Example 13

Activated carbon was prepared in the same way as in Example 1 except that 12 g (200 parts by weight in relative to 100 parts of the isotropic pitch) of pulverized sodium hydroxide was added, as an activating agent, to the material used in Example 4 and the temperature of the resultant mixture was raised from 200 to 600 °C over 2 hours and the raised temperature was kept for 2 hours(yield: 91%). Results about the above-mentioned items are shown in Table 1.

Example 14

Activated carbon was prepared in the same way as in Example 1 except that 6 g of isotropic pitch (oxygen concentration: 1.5%) having an average particle diameter of 10 mm was used. Results about the above-mentioned items are shown in Table 1.

Example 15

Activated carbon was prepared in the same way as in Example 4 except that the amount of used potassium hydroxide was set to 6 g (100 parts by weight in relative to 100 parts by weight of the isotropic pitch) (yield: 85%). Results about the above-mentioned items are shown in Table 1.

Example 16

Activated carbon was prepared in the same way as in Example 4 except that the amount of used potassium hydroxide was set to 9 g (150 parts by weight in relative to 100 parts by weight of the isotropic pitch) (yield: 71%). Results about the above-mentioned items are shown in Table 1.

Example 17

Activated carbon was prepared in the same way as in Example 1 except that 6 g of the isotropic pitch of Example 1 was used and 24 g (400 parts by weight in relative to 100 parts by weight of the isotropic pitch) of potassium hydroxide was used(yield: 48%). Results about the above-mentioned items are shown in Table 1.

Example 18

Activated carbon was prepared in the same way as in Example 4 except that the temperature of the isotropic pitch used in Example 4 was raised from 200 to 500 °C at a rate of 200 °C/hour to reach 500 °C and immediately thereafter the pitch was cooled to activate the pitch(yield: 87%). Results about the above-mentioned items are shown in Table 1.

Example 19

5 g of isotropic pitch used in Example 4 was put on a quartz glass boat and the boat was introduced into a tubular reaction furnace having a diameter of 4 cm. The system was kept at 850 °C for 4 hours in the current of a mixed gas of water vapor and nitrogen. The flow rates of water vapor and nitrogen were adjusted to 0.15 mL/minute and 100 mL/minute (which were converted values at 25 °C), respectively(yield: 48%). The resultant product was cooled, washed with water, and dried to give activated carbon. Results about the above-mentioned items are shown in Table 1.

Comparative Example 1

10 g of a carbonized shell of a coconut was put on a quartz glass boat and the boat was introduced into a tubular reaction furnace having a diameter of 4 cm. The system was kept at 700 °C for 1 hour in the current of a mixed gas of water vapor and nitrogen. The partial pressure ratio of water vapor was adjusted to 0.67. The resultant product was cooled, washed with water, and dried to give activated carbon(yield: 72%). Results about the above-mentioned items are shown in Table 1. As is evident from the results, the electrostatic capacitances of the activated carbons of Examples 1-19 were higher than that of the coconut shell type activated carbon of Comparative Example 1.

Comparative Example 2

Ten grams of natural meso phase pitch ["MPM-BL" (trade name; product by Adchemco Corp.)] was put on a quartz glass boat, and the boat was introduced into a tubular reaction furnace having a diameter of 4 cm. The temperature of the system was raised to 800 °C over 4 hours in the current of nitrogen (flow rate: 500 mL/minute). The raised temperature was kept for 2 hours. Thereafter, the system was cooled to give heat-treated meso phase pitch (yield: 72%). The same activation as in Example 1 was performed to produce activated carbon. Results about the above-mentioned items are shown in Table 1. As is clear from the results, the electrode expansion ratios of the activated carbons of Examples 1-19 were lower than that of the meso phase pitch type activated carbon of Comparative Example 2.

Table 1

| | Material | Activating agent | Amount of the activating agent (weight ratio) | Heat-treating conditions before the activation | Average particle diameter ($\mu$m) | Activating conditions | Specific surface area ($m^2$/g) | Amount of functional groups (meq/g) | D ratio | Electrode density (g/ml) | Electrostatic capacitance (F/cc) | Electrode expansion ratio (%) |
|---|---|---|---|---|---|---|---|---|---|---|---|---|
| Example 1 | Isotropic pitch | KOH | 2.0 | - | 20 | 700 °Cx1hr | 2060 | 1.9 | 2.8 | 0.52 | 20.2 | -5 |
| Example 2 | Isotropic pitch | KOH | 2.0 | - | 20 | 800 °Cx2hr | 2710 | 1.3 | 2.5 | 0.48 | 18.5 | -4 |
| Example 3 | Isotropic pitch | KOH | 2.0 | - | 12 | 700 °Cx1 hr | 1830 | 1.8 | 2.4 | 0.5 | 21.9 | -2 |
| Example 4 | Isotropic pitch | KOH | 2.0 | 700 °Cx2hr | 6 | 700 °Cx1hr | 1310 | 1.4 | 2.6 | 0.65 | 25.5 | -1 |
| Example 5 | Isotropic pitch | KOH | 2.0 | 700 °Cx2hr | 6 | 650 °Cx2hr | 1730 | 2.0 | 2.6 | 0.82 | 22.5 | -1 |
| Example 6 | Isotropic pitch | KOH | 2.0 | 600 °Cx2hr | 20 | 700 °Cx1 hr | 2000 | 1.7 | 2.4 | 0.6 | 22.5 | 3 |
| Example 7 | Isotropic pitch | KOH | 2.0 | 800 °Cx2hr | 20 | 700 °Cx1hr | 620 | 1.1 | 2.7 | 0.95 | 23.1 | 15 |
| Example 8 | Isotropic pitch | KOH | 2.0 | 950 °Cx2hr | 20 | 700 °Cx1hr | 160 | 0.3 | 2.9 | 1.07 | 21.8 | 17 |
| Example 9 | Isotropic pitch | KOH | 2.0 | - | 20 | 700 °Cx1hr | 2440 | 1.7 | 2.4 | 0.57 | 17.3 | -2 |
| Example 10 | Isotropic pitch | KOH | 2.0 | 700 °Cx2hr | 20 | 700 °Cx1hr | 720 | 1.3 | 2.4 | 0.91 | 20.1 | 6 |
| Example 11 | Isotropic pitch | KOH | 2.0 | - | 20 | 700 °Cx1hr | 1660 | 0.7 | 2.8 | 0.64 | 24.2 | -3 |
| Example 12 | Isotropic pitch | KOH | 2.0 | 700 °Cx2hr | 6 | 600 °Cx5hr | 1660 | 2.0 | 2.5 | 0.72 | 22.1 | 1 |

(continued)

| | Material | Activating agent | Amount of the activating agent (weight ratio) | Heat-treating conditions before the activation | Average particle diameter ($\mu$m) | Activating conditions | Specific surface area ($m^2$/g) | Amount of functional groups (meq/g) | D ratio | Electrode density (g/ml) | Electrostatic capacitance (F/cc) | Electrode expansion ratio (%) |
|---|---|---|---|---|---|---|---|---|---|---|---|---|
| Example 13 | Isotropic pitch | NaOH | 2.0 | 700 °Cx2hr | 6 | 600 °Cx2hr | 1080 | 1.5 | 2.8 | 0.85 | 20 | 0 |
| Example 14 | Isotropic pitch | KOH | 2.0 | - | $1\times10^4$ | 700 °Cx1hr | 1280 | 1.1 | 2.9 | 1.13 | 10.1 | -5 |
| Example 15 | Isotropic pitch | KOH | 1.0 | 700 °Cx2hr | 6 | 700 °Cx1hr | 1490 | 1.3 | 2.4 | 0.87 | 13 | -7 |
| Example 16 | Isotropic pitch | KOH | 1.5 | 700 °Cx2hr | 6 | 700 °Cx1hr | 1530 | 1.3 | 2.5 | 0.75 | 21.5 | 2 |
| Example 17 | Isotropic pitch | KOH | 4.0 | - | 20 | 700 °Cx1hr | 3570 | 2.6 | 2.5 | 0.36 | 14.9 | -8 |
| Example 18 | Isotropic pitch | KOH | 2.0 | 700 °Cx2hr | 6 | 500 °Cx0hr | 190 | 1.1 | 3.6 | 1.12 | 3.3 | -4 |
| Example 19 | Isotropic pitch | Steam | - | 700 °Cx2hr | 6 | 850 °Cx4hr | 960 | 0.2 | 3.7 | 0.91 | 13.5 | -3 |
| comparative Example 1 | coconut shell | Steam | - | - | 60 | 700 °Cx1hr | 560 | 0.1 | 3.7 | 0.94 | 0.6 | 0 |
| Comparative Example 2 | Meso phase pitch | KOH | - | 800 °Cx2hr | 15 | 700 °Cx1hr | 120 | 0.7 | 3.1 | 1.11 | 21.1 | 44 |

Table 2

|  | Cr content (ppm) | Fe content (ppm) | Cu content (ppm) | Ni content (ppm) | Zn content (ppm) | Total amount (ppm) |
|---|---|---|---|---|---|---|
| Example 1 | 18.9 | 22.4 | 2.2 | 20.1 | 6.8 | 70.4 |
| Example 11 | 8.2 | 12.4 | 2.1 | 0.7 | 11.8 | 35.2 |

According to the present invention, it is possible to provide activated carbon which is made from granular isotropic pitch, and a process for producing the same. By making the activated carbon of the present invention into polarizable electrodes and combing the electrodes with current electrodes and an electrolyte solution, a capacitor which has a large electrostatic capacitance and is superior in low-expansibility of the electrodes at the time of charge can be made.

## Claims

1. A process for producing activated carbon, wherein granular isotropic pitch is activated with a chemical agent at least one part of which is a compound comprising an alkali metal element, wherein the activating step comprises:

   a pitch-moistening step of making at least the surface of the isotropic pitch into a moisture state at a temperature of 200°C or lower;
   a pitch-solidifying step of canceling the moisture state at a temperature of 400°C or lower into a solid state; and
   a pitch-heat-treating step of heat-treating the solid at a temperature over 400°C while keeping solid state.

2. Process according to claim 1, wherein the granular isotropic pitch is heat-treated under inert gas to remove volatile substances before it is activated.

3. Process according to claim 1, wherein the granular isotropic pitch is made infusible before it is activated.

4. Process according to claim 1, wherein the granular isotropic pitch is made infusible and subsequently heat-treated under inert gas to remove volatile substances before it is activated.

5. The process for producing the activated carbon according to claim 2 or 4, wherein the temperature of the heat-treatment to remove volatile substances is from 600 to 1000 °C

6. The process for producing the activated carbon according to any one of claims 1-5, wherein the chemical agent is potassium hydroxide or sodium hydroxide.

7. The process for producing the activated carbon according to any one of claims 1-6, wherein the temperature of the activation with the chemical agent is from 500 to 900 °C.

8. The process for producing the activated carbon according to any one of claims 1-7, wherein the amount of the used chemical agent is from 100 to 400 parts by weight relative to 100 parts by weight of the isotropic pitch.

9. A polarizable electrode, which is produced by mixing the activated carbon obtained by the process according to any one of claims 1-8 with at least a binder and an electroconductive filler.

10. The polarizable electrode according to claim 9, which is a coated electrode obtained by applying a paste mixture.

11. The polarizable electrode according to claim 9, which is a sheet electrode obtained by forming a mixture into a sheet.

12. The polarizable electrode according to any one of claims 9-11, which has an electrode density of 0.3 $g/cm^3$ or more.

13. An electric double layer capacitor composed essentially of a pair of polarizable electrodes, a current collector set onto each of the polarizable electrodes, and an electrolyte solution, wherein at least one of the polarizable electrodes is the polarizable electrode according to any one of claims 9-11.

14. The electric double layer capacitor according to claim 13, wherein the expansion ratio of the polarizable electrodes is 40% or less after charge and discharge.


**Patentansprüche**

1. Ein Verfahren zum Herstellen von aktiviertem Kohlenstoff, wobei gekörntes isotropes Pech mit einem chemischen Mittel, von dem mindestens ein Teil eine Verbindung ist, die ein Alkalimetallelement umfasst, aktiviert wird, wobei der Aktivierungsschritt umfasst:

einen Pech-Befeuchtungsschritt des Versetzens mindestens der Oberfläche des isotropen Pechs in einen befeuchteten Zustand bei einer Temperatur von 200°C oder niedriger;
einen Pech-Verfestigungsschritt des Aufhebens des befeuchteten Zustands bei einer Temperatur von 400°C oder niedriger in einen festen Zustand; und
einen Pech-Wärmebehandlungsschritt des Wärmebehandelns des Feststoffs bei einer Temperatur über 400°C unter Beibehaltung des festen Zustands.

2. Verfahren gemäß Anspruch 1, wobei das gekörnte isotrope Pech unter Inertgas wärmebehandelt wird, um flüchtige Substanzen zu entfernen, bevor es aktiviert wird.

3. Verfahren gemäß Anspruch 1, wobei das gekörnte isotrope Pech unschmelzbar gemacht wird, bevor es aktiviert wird.

4. Verfahren gemäß Anspruch 1, wobei das gekörnte isotrope Pech unschmelzbar gemacht wird und anschließend unter Inertgas wärmebehandelt wird, um flüchtige Substanzen zu entfernen, bevor es aktiviert wird.

5. Das Verfahren zum Herstellen des aktivierten Kohlenstoffs gemäß Anspruch 2 oder 4, wobei die Temperatur der Wärmebehandlung zum Entfernen von flüchtigen Substanzen von 600 bis 1000°C beträgt.

6. Das Verfahren zum Herstellen des aktivierten Kohlenstoffs gemäß einem der Ansprüche 1 bis 5, wobei das chemische Mittel Kaliumhydroxid oder Natriumhydroxid ist.

7. Das Verfahren zum Herstellen des aktivierten Kohlenstoffs gemäß einem der Ansprüche 1 bis 6, wobei die Temperatur der Aktivierung mit dem chemischen Mittel von 500 bis 900°C beträgt.

8. Das Verfahren zum Herstellen des aktivierten Kohlenstoffs gemäß einem der Ansprüche 1 bis 7, wobei die Menge des verwendeten chemischen Mittels von 100 bis 400 Gewichtsteile bezogen auf 100 Gewichtsteile des isotropen Pechs beträgt.

9. Eine polarisierbare Elektrode, welche hergestellt wird durch Mischen des aktivierten Kohlenstoffs, der mit dem Verfahren gemäß einem der Ansprüche 1 bis 8 erhalten wird, mit mindestens einem Bindemittel und einem elektrisch leitenden Füllstoff.

10. Die polarisierbare Elektrode gemäß Anspruch 9, welche eine beschichtete Elektrode ist, die durch Auftragen eines Pastengemischs erhalten wird.

11. Die polarisierbare Elektrode gemäß Anspruch 9, welche eine flächige Elektrode ist, die durch Formen eines Gemischs in ein Flächengebilde erhalten wird.

12. Die polarisierbare Elektrode gemäß einem der Ansprüche 9 bis 11, welche eine Elektrodendichte von 0,3 g/cm$^3$ oder mehr aufweist.

13. Ein elektrischer Doppelschichtkondensator, im Wesentlichen zusammengesetzt aus einem Paar polarisierbarer Elektroden, einem Stromkollektor, der auf jede der polarisierbaren Elektroden gesetzt ist, und einer Elektrolytlösung, wobei mindestens eine der polarisierbaren Elektroden die polarisierbare Elektrode gemäß einem der Ansprüche 9 bis 11 ist.

**14.** Der elektrische Doppelschichtkondensator gemäß Anspruch 13, wobei die Ausdehnungsrate der polarisierbaren Elektroden 40% oder weniger nach Ladung und Entladung beträgt.

**Revendications**

**1.** Procédé de production de charbon activé, dans lequel une poix granulaire isotrope est activée avec un agent chimique dont au moins une partie est un composé comprenant un élément de métal alcalin, où l'étape d'activation comprend :

une étape d'humidification de la poix consistant à amener au moins la surface de la poix isotrope jusqu'à un certain état d'humidité à une température de 200 °C ou moins,
une étape de solidification de la poix consistant à annuler l'état d'humidité à une température de 400 °C ou moins pour parvenir à un état solide ; et
une étape de traitement thermique de la poix consistant à chauffer le solide à une température supérieure à 400 °C tout en conservant l'état solide.

**2.** Procédé selon la revendication 1, dans lequel la poix granulaire isotrope est chauffée sous gaz inerte pour éliminer les substances volatiles avant d'être activée.

**3.** Procédé selon la revendication 1, dans lequel la poix granulaire isotrope est rendue infusible avant d'être activée.

**4.** Procédé selon la revendication 1, dans lequel la poix granulaire isotrope est rendue infusible, puis chauffée sous gaz inerte pour éliminer les substances volatiles avant d'être activée.

**5.** Procédé de production du charbon activé selon la revendication 2 ou 4, dans lequel la température du chauffage destiné à éliminer les substances volatiles est de 600 à 1 000 °C.

**6.** Procédé de production du charbon activé selon l'une quelconque des revendications 1 à 5, dans lequel l'agent chimique est l'hydroxyde de potassium ou l'hydroxyde de sodium.

**7.** Procédé de production du charbon activé selon l'une quelconque des revendications 1 à 6, dans lequel la température d'activation avec l'agent chimique est de 500 à 900 °C.

**8.** Procédé de production du charbon activé selon l'une quelconque des revendications 1 à 7, dans lequel la quantité de l'agent chimique utilisé est de 100 à 400 parties en poids pour 100 parties en poids de poix isotrope.

**9.** Electrode polarisable, qui est produite en mélangeant le charbon activé obtenu par le procédé selon l'une quelconque des revendications 1 à 8 avec au moins un liant et une charge électroconductrice.

**10.** Electrode polarisable selon la revendication 9, qui est une électrode revêtue obtenue en appliquant un mélange pâteux.

**11.** Electrode polarisable selon la revendication 9, qui est une électrode en feuille obtenue en façonnant un mélange de manière à obtenir une feuille.

**12.** Electrode polarisable selon l'une quelconque des revendications 9 à 11 qui a une densité d'électrode de 0,3 g/cm$^3$ ou plus.

**13.** Condensateur électrique double couche composé essentiellement d'une paire d'électrodes polarisables, d'un ensemble collecteur de courant sur chacune des électrodes polarisables, et d'une solution d'électrolyte, dans lequel au moins une des électrodes polarisables est l'électrode polarisable selon l'une quelconque des revendications 9 à 11.

**14.** Condensateur électrique double couche selon la revendication 13, dans lequel le taux d'expansion des électrodes polarisables est de 40 % ou moins après charge et décharge.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11135380 A
- JP 10199767 A
- JP 11317333 A
- JP 11293527 A
- US 5387333 A

**Non-patent literature cited in the description**

- Technologies & Materials for EDLC. CMC, 26 October 1998
- Electric Double Layer Capacitor and Electricity Storing System. Nikkan Kogyo Newspaper Publishing Company, 1999, 82-84
- *DENKI KAGAKU,* 1998, vol. 66 (12), 1311-1317
- *TANSO,* 2000, vol. 193, 180-185